# EUROPÄISCHE PATENTSCHRIFT

(11) **EP 2 976 174 B1**
(45) Veröffentlichungstag und Bekanntmachung des Hinweises auf die Patenterteilung: **22.02.2017**
(21) Anmeldenummer: 14710563.9
(22) Anmeldetag: 17.03.2014
(51) Int. Cl.: B23D 77/00, B23D 77/02, B23D 77/12

(54) **REIBELEMENT, REIBWERKZEUG UND VERFAHREN ZU DESSEN HERSTELLUNG**
REAMING ELEMENT AND REAMING TOOL AND METHOD OF ITS MANUFACTURE
ÉLÉMENT D'ALÉSAGE ET ALÉSOIR ET SA MÉTHODE DE PRODUCTION

(30) Priorität: 18.03.2013 DE 102013204743
(43) Veröffentlichungstag der Anmeldung: 27.01.2016
(73) Patentinhaber: Komet Group GmbH, 74354 Besigheim (DE)
(72) Erfinder: HODZA, Erkan, 71679 Asperg (DE)
(74) Vertreter: Pfiz, Thomas
(86) Internationale Anmeldenummer: PCT/EP2014/055286
(87) Internationale Veröffentlichungsnummer: WO 2014/147017

(56) Entgegenhaltungen:
- EP-A1- 1 561 535
- EP-A1- 1 932 609
- WO-A1-2010/015530
- WO-A2-2008/055489
- CH-A- 285 540
- DE-A1- 4 405 749
- DE-A1- 10 102 697
- DE-A1-102008 027 945
- DE-A1-102010 018 339
- DE-U1- 20 319 341
- JP-A- 2003 340 646
- US-A- 3 759 625

## Beschreibung

Die Erfindung betrifft ein Reibelement für ein um eine Drehachse rotierend antreibbares Reibwerkzeug zur Feinbearbeitung einer vorgefertigten Bohrung mit einer stirnseitigen Hauptschneide für den Anschnitt einer Reibzugabe der Bohrung und einer an das radial äußere Ende der Hauptschneide anschließenden Nebenschneide, wobei die Hauptschneide und die Nebenschneide eine Spanfläche begrenzen und zwischen der Nebenschneide und deren Rückfreifläche eine Schlifffase ausgebildet ist, die eine Stützzone zur Führung an der Bohrungswand bildet. Die Erfindung betrifft weiter ein mit derartigen Reibelementen bestücktes Reibwerkzeug und ein Verfahren zu dessen Herstellung.

Reiben ist ein spanabhebendes Bearbeitungsverfahren mit geometrisch bestimmter Schneide, wobei im Gegensatz zum Voll- oder Aufbohren nur mit kleinen Spanungsquerschnitten in stets vorbearbeiteten Bohrungen gearbeitet wird. Die abzuspanenden Aufmaße bzw. Reibzugaben im Durchmesser liegen typischerweise im Bereich von 0,1 bis 0,5 mm. Ein Reibwerkzeug soll eine hohe Bohrungsqualität über viele Bauteile gewährleisten, mit möglichst geringen Toleranzen im Durchmesser sowie in der Form und Lage der Bohrung und deren Rauheit. Um die Maßgenauigkeit der Bohrung im Bereich weniger Mikrometer einzuhalten, werden Reibwerkzeuge individuell an die Bearbeitungsaufgabe angepasst. Diese Genauigkeit kann im Allgemeinen durch exakt definiertes Schleifen von fest mit dem Werkzeuggrundkörper verbundenen Schneidkörpern bzw. Reibelementen erreicht werden. In diesem Zusammenhang ist es bekannt, angrenzend an die Nebenschneide eine Rundschlifffase anzuschleifen, die an der Bohrungswand reibt und dabei eine Führungs- und Glättungsfunktion ausübt. Durch die Reibungskraft wird allerdings Wärme erzeugt, und es kann zu unerwünschten Schwingungen kommen.

Ausgehend hiervon liegt der Erfindung die Aufgabe zugrunde, die im Stand der Technik gemäß dem Dokument DE 10 2010 018339 A bekannten Reibelemente sowie Reibwerkzeuge und Verfahren zu deren Herstellung weiter zu verbessern und eine prozesssichere Bearbeitung unter Einhaltung hoher Anforderungen an die Bohrungsqualität zu gewährleisten.

Zur Lösung dieser Aufgabe wird die in den unabhängigen Patentansprüchen 1, 6 und 7 jeweils angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, durch eine Strukturierung der Schlifffase das Schneiden von den Funktionen Führen und Glätten günstig zu entkoppeln. Dementsprechend wird erfindungsgemäß vorgeschlagen, dass die Stützzone kleiner als die Schlifffase ist und über eine Zwischenpartie der Schlifffase im seitlichen Abstand von der Nebenschneide gehalten ist. Auf diese Weise kann der Berührungsbereich für ein effektives Führen und Glätten weiter von der Nebenschneide entfernt werden, ohne dass die für die Reibwärme wirksame Eingriffsfläche zunimmt. Vielmehr wird durch die von der Bohrungswand rückgesetzte Zwischenpartie ein Teil der Schlifffase gleichsam unwirksam gemacht. Damit kann eine prozesssichere Bearbeitung bei engen Toleranzen der Bohrung erreicht werden und eine vorgegebene Oberflächenqualität, Maßgenauigkeit und -konstanz auch über eine Vielzahl von Bohrungen bzw. Werkstücken sichergestellt werden.

Vorteilhafterweise besitzt die Schlifffase der Grundform nach eine an die gewünschte Bohrung angepasste Kreisbogenkontur, wobei die Zwischenpartie durch Materialabtrag im Bereich der Kreisbogenkontur eingeformt ist.

Gemäß der Erfindung ist die Zwischenpartie durch eine vorzugsweise nutartige Vertiefung zwischen der Nebenschneide und der Stützzone gebildet. Auf diese Weise können an den voneinander beabstandeten Flanken der Vertiefung die Funktionen "Schneiden" und "Glätten/Stützen" besonders wirksam entkoppelt werden.

In diesem Zusammenhang ist es vorteilhaft, wenn die Vertiefung eine maximale Tiefe von weniger als 10 µm besitzt.

Um die Erzeugung von Reibungswärme wirksam zu begrenzen, sollte in jedem Fall gewährleistet sein, dass die in Umfangsrichtung gemessene Breite der Stützzone zwischen 0,05 und 0,75 mm, bevorzugt zwischen 0,05 und 0,15 mm beträgt.

Weiterhin beträgt der in Umfangsrichtung gemessene Abstand der Stützzone von der Nebenschneide das 0,005- bis 0,05-fache, vorteilhafterweise das 0,01-fache des äußeren Flugkreisdurchmessers der Hauptschneide.

Gegenstand der Erfindung ist auch ein Reibwerkzeug mit einem rotierend antreibbaren Grundkörper und mehreren über den Umfang des Grundkörpers verteilten erfindungsgemäßen Reibelementen, die einstückig an dem Grundkörper angeformt sind oder als Anbauteil mit dem Grundkörper fest verbunden sind.

In verfahrensmäßiger Hinsicht wird die eingangs genannte Aufgabe durch die Abfolge mindestens der Verfahrensschritte gemäß dem unabhängigen Anspruch 8 gelöst.

Damit werden die vorstehend beschriebenen Vorteile für das Verfahrenserzeugnis in gleicher Weise erreicht. Bei der Werkzeugfertigung ist es auch möglich, dass mehrere Reibelemente am Umfang eines Grundkörpers angeformt oder in einem jeweiligen Sitz fest fixiert werden.

Im Folgenden wird die Erfindung anhand der in der Zeichnung schematisch dargestellten Ausführungsbeispiele näher erläutert. Es zeigen:
- Fig. 1: ein Reibwerkzeug mit einem Grundkörper und daran angebrachten Reibelementen in perspektivischer Darstellung;
- Fig. 2: eine Ausführungsform eines Reibelements gemäß der Erfindung in perspektivischer Darstellung;
- Fig. 3: eine ausschnittsweise vergrößerte Stirnseitenansicht in Richtung der Nebenschneide des Reibelements nach Fig. 2;
- Fig. 4: ein Reibelement in perspektivischer Darstellung;
- Fig. 5: eine ausschnittsweise vergrößerte Stirnseitenansicht in Richtung der Nebenschneide des Reibelements nach Fig. 4;
- Fig. 6: ein Reibelement in perspektivischer Darstellung;
- Fig. 7: eine ausschnittsweise vergrößerte Stirnseitenansicht in Richtung der Nebenschneide des Reibelements nach Fig. 6.

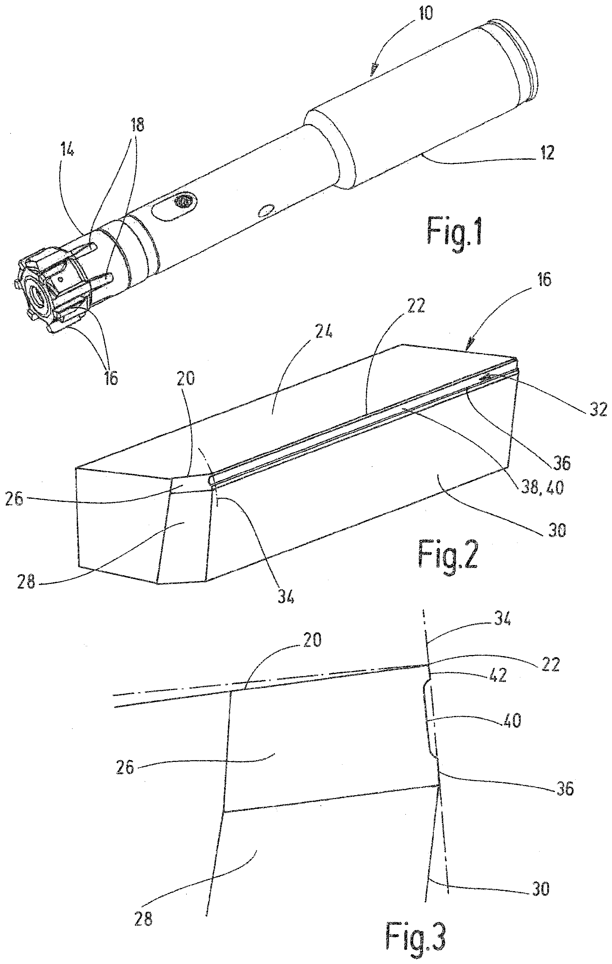

Das in Fig. 1 dargestellte Reibwerkzeug 10 lässt sich für die Feinbearbeitung einer vorgefertigter Bohrung in einem Werkstück mittels einer Werkzeugmaschine um seine Längsachse rotierend antreiben und dabei in Richtung der Längsachse vorschieben, um eine Reibzugabe spanabhebend abzutragen und so eine passgenaue Bohrung mit hoher Oberflächengüte zu erzeugen. Hierfür weist das Reibwerkzeug 10 einen in eine Maschinenspindel einspannbaren Schaft 12, einen am vorderen Ende des Schafts 12 angeordneten Grundkörper 14 und eine Mehrzahl von in Umfangsrichtung verteilt an dem Grundkörper 14 angelöteten Reibelementen 16 auf. In Drehrichtung vor den Reibelementen 16 ist jeweils eine Spannut 18 in den Grundkörper 14 eingeschliffen.

Die in den Fig. 2, 4, 6 in verschiedenen Ausführungsformen gezeigten langgestreckten Reibelemente 16 besitzen an ihrer vorderen Stirnseite jeweils eine Hauptschneide 20 und eine an das radial äußere Ende der Hauptschneide 20 anschließende, mit geringer axialer Konizität entgegen der Vorschubrichtung zu der Drehachse konvergierenden Nebenschneide 22. Der Schneidkantenverlauf bildet eine Anschnittgeometrie mit stumpfem Winkel im Übergang der Hauptschneide 20 zur Nebenschneide 22, wobei beim Reibschneiden eine Zentralkraft erzeugt wird, die das Werkzeug in die eigene Mitte drückt. Die Haupt- und Nebenschneide 20, 22 begrenzen eine in Drehrichtung weisende Spanfläche 24, welche die abgetragenen Späne über die vorgelagerte Spannut 18 ableitet. Rückseitig an die Hauptschneide 20 schließen sich unter unterschiedlichen Freiwinkeln eine Primärfreifläche 26 und eine Sekundärfreifläche 28 an. Beispielsweise kann der erste Freiwinkel 8° und der zweite Freiwinkel 12° betragen.

Zwischen der Nebenschneide 22 und deren Rückfreifläche 30 ist eine schmale Schlifffase 32 ausgebildet, die der Grundform nach die Kontur eines Kreis- bzw. Rundschliffbogens 34 aufweist und in den verschiedenen Ausführungsformen durch Materialabtrag unterschiedlich ausgestaltet ist. Dabei wird jeweils eine Stützzone 36 zur Abstützung an der Innenwand der zu bearbeitenden Bohrung gebildet, die eine reduzierte Fläche im Vergleich zu der gesamten Schlifffase 32 aufweist und durch eine Zwischenpartie 38 der Schlifffase 32 im seitlichen Abstand von der Nebenschneide 22 gehalten ist.

Bei dem in Fig. 2 und 3 gezeigten Ausführungsbeispiel gemäß der Erfindung ist die Zwischenpartie 38 durch eine nutartige Vertiefung 40 gebildet. Die Vertiefung 40 schließt über eine Nebenschneidenflanke 42 an die Nebenschneide 22 an und wird an der von der Nebenschneide 22 entfernten Seite durch die Stützzone 36 begrenzt. Die schmale Stützzone 36 erzeugt somit wenig Reibung an der Bohrungswand und besitzt zugleich aufgrund des vergleichsweise großen Abstandes zu der Nebenschneide 22 gute Führungseigenschaften. Die maximale Tiefe der Vertiefung beträgt weniger als 10 µm, beispielsweise 7 µm. Die Breite der Nebenschneidenflanke 42 liegt zweckmäßig im Bereich zwischen 0,01 mm und 0,02 mm, während die Stützzone 36 ebenfalls in Umfangsrichtung gesehen eine Breite zwischen 0,05 mm und 0,15 mm besitzt. Vorteilhafterweise ist die Breite der Vertiefung 40 so gewählt, dass der in Umfangsrichtung gemessene Abstand der Stützzone 36 von der Nebenschneide 22 das 0,005- bis 0,05-fache, bevorzugt das 0,01-fache des äußeren Flugkreisdurchmessers der Hauptschneide 20 beträgt.

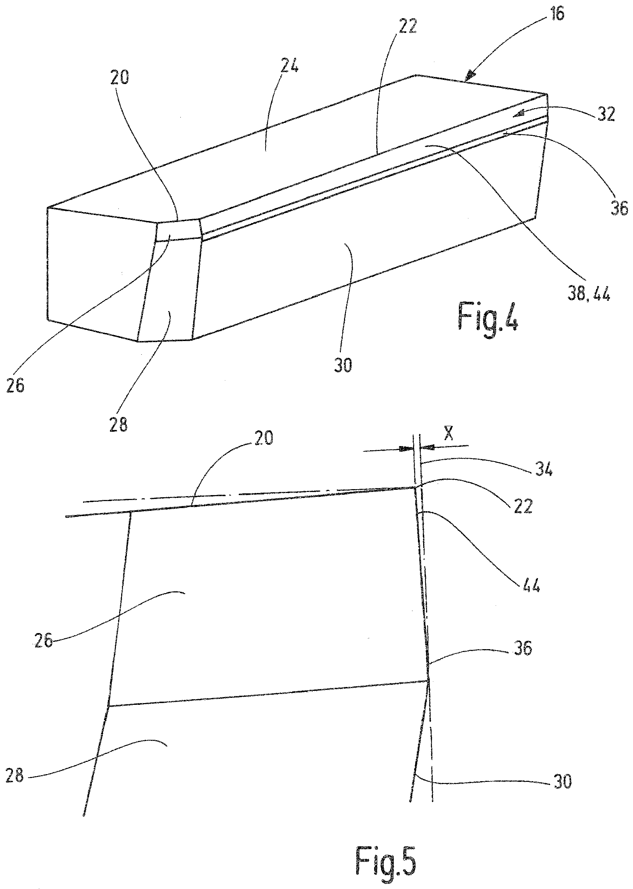

Das in Fig. 4 und 5 gezeigte Reibelement unterscheidet sich vor allem dadurch, dass die Zwischenpartie 38 durch eine Rücksetzung 44 gegenüber dem Rundschliffbogen 34 gebildet ist und damit von der Nebenschneide 22 zu der Stützzone 36 radial ansteigt. Die Nebenschneide 22 besitzt somit einen um das Maß x (Fig. 5) kleineren Flugkreis als die Stützzone 36, wobei x weniger als 3 µm, zweckmäßig 2,5 µm beträgt. Auf diese Weise wird wiederum ein gegenüber der Nebenschneide 22 entgegen der Drehrichtung zurückversetzter und in der Breite beispielsweise auf 0,1 mm reduzierter Stützbereich 36 geschaffen, in dessen Berührbereich das Material der Bohrungswand geebnet oder geglättet wird, während zugleich eine Führungsfunktion erreicht wird. Vorteilhafterweise ist auch hier die Breite der Rücksetzung 44 so gewählt, dass der in Umfangsrichtung gemessene Abstand der Stützzone 36 von der Nebenschneide 22 das 0,005- bis 0,05-fache, bevorzugt das 0,01-fache des äußeren Flugkreisdurchmessers der Hauptschneide 20 beträgt.

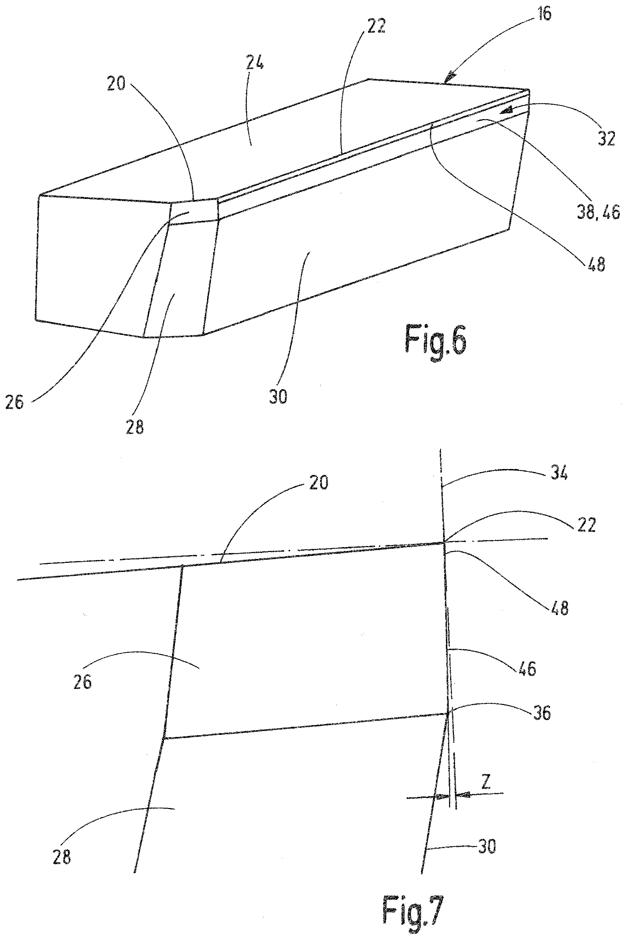

Bei dem in Fig. 5 und 6 gezeigten Reibelement sind wiederum gleiche oder ähnliche Teile mit denselben Bezugszeichen wie vorstehend beschrieben versehen. In diesem Ausführungsbeispiel fällt die Zwischenpartie 38 als Abflachung 46 zu der nachlaufenden Stützzone 36 hin radial ab, so dass die Nebenschneide 22 einen um das Maß z größeren Flugkreisradius als die Stützzone 36 besitzt. Das Maß z sollte dabei mindestens 0,01 mm betragen. Direkt an die Nebenschneide 22 angrenzend kann ein Rundschliffbereich 48 mit einer maximalen Breite von 0,03 mm vorgesehen sein, während die anschließende Abflachung 46 eine Breite von maximal 0,2 mm besitzen sollte. Die Stützzone 36 berührt somit bei rein geometrischer Schnittdarstellung die Bohrungswand nicht, sondern kommt erst stabilisierend zur Geltung, wenn Schwingungen und Werkzeugbewegungen aus der Bohrungsachse heraus auftreten. Dies ist insbesondere bei der Stahlbearbeitung der Fall, bei der weniger das Glätten der Bohrung, sondern vielmehr die Schwingungsdämpfung durch die Stützzone 36 im Vordergrund steht. Dabei wird auch das Ziel verfolgt, durch den erhöhten Abstand der Stützzone 36 von der Nebenschneide 22 einen verbesserten Stabilisierungseffekt zu erzielen und durch den reduzierten Rundschliffbereich 48 die Erzeugung von Reibungswärme zu minimieren.

Bei der Werkezugherstellung erfolgt nach dem Anlöten der Reibelemente 16 an den Grundkörper 14 das Rundschleifen der Schlifffase 32 entsprechend dem gewünschten Bohrungsdurchmesser. Dabei ist eine minimale axiale Konizität vorgesehen, so dass der Rundschliffdurchmesser entgegen der Vorschubrichtung leicht abnimmt. Sodann werden die Spannuten 18 eingeschliffen und die Spanflächen 24 und Rückfreiflächen 30 der Reibelemente 16 fertiggeschliffen. Ein weiterer Verfahrensschritt umfasst das Schleifen der Hauptschneide 20 bzw. der Anschnittgeometrie, die insbesondere durch den Anschnittwinkel, den Spanwinkel und die Primär- und Sekundärfreiwinkel definiert wird. Beim anschließenden Einschleifen der Zwischenpartie 38 wird eine bereichsweise Vertiefung 40 oder Abschrägung 44, 46 der Schlifffase 32 erzeugt, wobei der verbleibende Bereich der Schlifffase eine Stützzone 36 zur Führung an der Bohrungswand bildet. Es versteht sich, dass ggf. zusätzliche Bearbeitungsschritte wie Beschichten oder Reinigen erforderlich sind, um das Werkzeug vollständig herzustellen.

## Patentansprüche

1. Reibelement für ein um eine Drehachse rotierend antreibbares Reibwerkzeug (10) zur Feinbearbeitung einer vorgefertigten Bohrung mit einer stirnseitigen Hauptschneide (20) für den Anschnitt einer Reibzugabe der Bohrung und einer an das radial äußere Ende der Hauptschneide (20) anschließenden Nebenschneide (22), wobei die Hauptschneide (20) und die Nebenschneide (22) eine Spanfläche (24) begrenzen und zwischen der Nebenschneide (22) und deren Rückfreifläche eine eine Stützzone (36) zur Führung an der Bohrungswand bildende Schlifffase (32) ausgebildet ist, **dadurch gekennzeichnet, dass** die Stützzone (36) kleiner als die Schlifffase (32) ist und durch eine Zwischenpartie (38) der Schlifffase (32) im seitlichen Abstand von der Nebenschneide (22) gehalten ist, dass die Zwischenpartie (38) durch eine nutartige Vertiefung (40) zwischen der Nebenschneide (22) und der Stützzone (36) gebildet ist, dass der in Umfangsrichtung gemessene Abstand der Stützzone (36) von der Nebenschneide (22) das 0,005- bis 0,05-fache des äußeren Flugkreisdurchmessers der Hauptschneide (20) beträgt, und dass die in Umfangsrichtung gemessene Breite der Stützzone (36) zwischen 0,05 und 0,75 mm beträgt.

2. Reibelement nach Anspruch 1, **dadurch gekennzeichnet, dass** die Schlifffase (32) der Grundform nach eine Kreisbogenkontur aufweist, und dass die Zwischenpartie (38) durch Materialabtrag im Bereich der Kreisbogenkontur eingeformt ist.

3. Reibelement nach Anspruch 1 oder 2, **dadurch gekennzeichnet, dass** die Vertiefung (40) eine maximale Tiefe von weniger als 10 µm besitzt.

4. Reibelement nach einem der Ansprüche 1 bis 3, **dadurch gekennzeichnet, dass** die in Umfangsrichtung gemessene Breite der Stützzone (36) zwischen 0,05 und 0,15 mm beträgt.

5. Reibelement nach einem der Ansprüche 1 bis 4, **dadurch gekennzeichnet, dass** der in Umfangsrichtung gemessene Abstand der Stützzone (36) von der Nebenschneide (22) das 0,01-fache des äußeren Flugkreisdurchmessers der Hauptschneide (20) beträgt.

6. Reibwerkzeug mit einem rotierend antreibbaren Grundkörper (14) und mehreren über den Umfang des Grundkörpers (14) verteilten Reibelementen (16) nach einem der Ansprüche 1 bis 5, wobei die Reib¬elemente (16) einstückig an dem Grundkörper (14) angeformt sind oder als Anbauteil mit dem Grundkörper (14) fest verbunden sind.

7. Verfahren zur Herstellung eines Reibwerkzeugs enthaltend Reibelemente (16) nach einem der Ansprüche 1 bis 5, mit zumindest folgenden Verfahrensschritten:
a) Rundschleifen der Schlifffase (32) nach Maßgabe des Bohrungsradius,
b) Fertigschleifen der Spanfläche (24) und der Rückfreifläche (30),
c) Schleifen der Hauptschneide (20),
d) Einschleifen der Zwischenpartie (38) als bereichsweise Vertiefung (40) der Schlifffase (32), wobei der in Umfangsrichtung gemessene Abstand der Stützzone (36) von der Nebenschneide (22) das 0,005- bis 0,05-fache des äußeren Flugkreisdurchmessers der Hauptschneide (20) beträgt und die in Umfangsrichtung gemessene Breite der Stützzone (36) zwischen 0,05 und 0,75 mm beträgt.

8. Verfahren nach Anspruch 7, **dadurch gekennzeichnet, dass** mehrere Reibelemente (16) am Umfang eines Grundkörpers (14) angeformt oder in einem jeweiligen Sitz fest fixiert werden.

## Claims

1. A reaming element for a reaming tool (10), capable of being driven rotatingly about a rotational axis, for fine machining of a previously produced bore, comprising a frontal main cutting edge (20) for the lead of a reaming allowance of the bore and a secondary cutting edge (22) adjoining the radially outer end of the main cutting edge (20), wherein the main cutting edge (20) and the secondary cutting edge (22) delimit a cutting face (24), and a ground land (32), which forms a support zone (36) for guidance on the bore wall, is configured between the secondary cutting edge (22) and the rear flank thereof, **characterized in that** the support zone (36) is smaller than the land (32) and is kept, by an intermediate section (38) of the land (32), at a lateral distance from the secondary cutting edge (22) that the intermediate section (38) is formed by a groove-like recess (40) between the secondary cutting edge (22) and the support zone (36), that the distance of the support zone (36) from the secondary cutting edge (22), measured in the peripheral direction, is 0.005 to 0.05 times the outer pitch circle diameter of the main cutting edge (20) and that the width of the support zone (36), measured in the peripheral direction, is between 0.05 and 0.75 mm.

2. The reaming element as claimed in claim 1, **characterized in that** the land (32) has, according to the basic shape, a circular arc contour, and **in that** the intermediate section (38) is shaped by material removal in the region of the circular arc contour.

3. The reaming element as claimed in claim 1 or 2, **characterized in that** the recess (40) possesses a maximum depth of less than 10 µm.

4. The reaming element as claimed in one of claims 1 to 3, **characterized in that** the width of the support zone (36), measured in the peripheral direction, is between 0.05 and 0.15 mm.

5. The reaming element as claimed in one of claims 1 to 4, **characterized in that** the distance of the support zone (36) from the secondary cutting edge (22), measured in the peripheral direction, is 0.01 times the outer pitch circle diameter of the main cutting edge (20).

6. A reaming tool having a rotatingly drivable main body (14) and a plurality of reaming elements (16), distributed over the periphery of the main body (14), as claimed in one of claims 1 to 5, wherein the reaming elements (16) are formed in one piece onto the main body (14) or are fixedly connected, as an attachment, to the main body (14).

7. A method for manufacturing a reaming tool containing reaming elements (16) as claimed in one of claims 1 to 5, comprising at least the following method steps:
a) circular grinding of the land (32) on the basis of the bore radius,
b) finish-grinding of the cutting face (24) and of the rear flank (30),
c) grinding of the main cutting edge (20),
d) grinding-in of the intermediate section (38) as a regional recess (40) of the land (32), whereat the distance of the support zone (36) from the secondary cutting edge (22), measured in the peripheral direction, is 0.005 to 0.05 times the outer pitch circle diameter of the main cutting edge (20) and that the width of the support zone (36), measured in the peripheral direction, is between 0.05 and 0.75 mm.

8. The method as claimed in claim 7, **characterized in that** a plurality of reaming elements (16) are formed onto the periphery of a main body (14) or are firmly fixed in a respective seat.

## Revendications

1. Élément de friction pour un outil de friction (10) entraînable en rotation autour d'un axe de rotation pour l'usinage fin d'un alésage préfabriqué avec un couteau principal frontal (20) pour l'entame d'une surépaisseur de friction et un couteau accessoire (22) rattaché à l'extrémité extérieure radiale du couteau principal (20), dans lequel le couteau principal (20) et le couteau accessoire (22) délimitent une surface d'attaque (24) et une zone d'appui (36) pour le guidage sur le chanfrein de rectification (32) se constituant sur la paroi d'alésage est exécutée entre le couteau accessoire (22) et sa face de dépouille arrière, **caractérisé en ce que** la zone d'appui (36) est plus petite que le chanfrein de rectification (32) et est maintenue en écartement latéral du couteau accessoire (22) par une partie intermédiaire (38) du chanfrein de rectification (32), **en ce que** la partie intermédiaire (38) est constituée par une cavité en forme de rainure (40) entre le couteau accessoire (22) et la zone d'appui (36), **en ce que** l'écartement entre la zone d'appui (36) et le couteau accessoire (22) mesuré dans le sens périmétrique varie entre 0,005 et 0,05 fois le diamètre de coupe extérieur du couteau principal (20) et **en ce que** la largeur de la zone d'appui (36) mesurée dans le sens périmétrique varie entre 0,05 et 0,75 mm.

2. Élément de friction selon la revendication 1, **caractérisé en ce que** le chanfrein de rectification (32) présente une forme de base en contour d'arc de cercle et **en ce que** la partie intermédiaire (38) est formée par enlèvement de matière dans la zone du contour d'arc de cercle.

3. Élément de friction selon la revendication 1 ou 2, **caractérisé en ce que** la cavité (40) possède une profondeur maximale inférieure à 10 µm.

4. Élément de friction selon l'une des revendications 1 à 3, **caractérisé en ce que** la largeur de la zone d'appui (36) mesurée dans le sens périmétrique varie entre 0,05 et 0,15 mm.

5. Élément de friction selon l'une des revendications 1 à 4, **caractérisé en ce que** l'écartement entre la zone d'appui (36) et le couteau accessoire (22) mesuré dans le sens périmétrique correspond à 0,01 fois le diamètre de coupe extérieur du couteau principal (20).

6. Outil de friction avec un corps de base (14) entraînable en rotation et plusieurs éléments de friction (16) selon l'une des revendications 1 à 5 répartis sur le périmètre du corps de base (14), dans lequel les éléments de friction (16) sont formés en une seule pièce sur le corps de base (14) ou reliés de manière fixe avec le corps de base (14) sous forme de pièce à montage additionnel.

7. Procédé de fabrication d'un outil de friction contenant des éléments de friction (16) selon l'une des revendications 1 à 5, comprenant au moins les étapes procédurales suivantes :
a) rectification cylindrique du chanfrein de rectification (32) conformément au rayon d'alésage.
b) rectification fine de la surface d'attaque (24) et de la face de dépouille arrière (30),
c) rectification du couteau principal (20),
d) rectification de la partie intermédiaire (38) sous forme de cavité partielle (40) du chanfrein de rectification (32), dans lequel l'écartement entre la zone d'appui (36) et le couteau accessoire (22) mesuré dans le sens périmétrique varie entre 0,005 et 0,05 fois le diamètre de coupe extérieur du couteau principal (20) et la largeur de la zone d'appui (36) mesurée dans le sens périmétrique varie entre 0,05 et 0,75 mm.

8. Procédé selon la revendication 7, **caractérisé en ce que** plusieurs éléments de friction (16) sont formés sur le périmètre d'un corps de base (14) ou fermement fixés dans un siège respectif.
